# EUROPÄISCHE PATENTSCHRIFT

(11) **EP 1 130 377 B1**
(45) Veröffentlichungstag und Bekanntmachung des Hinweises auf die Patenterteilung: **15.09.2004**
(21) Anmeldenummer: 01100303.5
(22) Anmeldetag: 04.01.2001
(51) Int. Cl.: G01N 1/31, A61B 10/00, C12M 1/16

(54) **Vorrichtung zur automatischen Identifikation und Bearbeitung von Objekten**
Apparatus for automatic identification and processing of objects
Appareil pour l'identification et le traitement automatique des objets

(30) Priorität: 03.03.2000 DE 10010140
(43) Veröffentlichungstag der Anmeldung: 05.09.2001
(73) Patentinhaber: Leica Microsystems Nussloch GmbH, 69226 Nussloch b. Heidelberg (DE)
(72) Erfinder: Käpplein, Andreas, 68789 St. Leon-Rot (DE); Gropp, Robert, 67105 Schifferstadt (DE); Scheck, Peter, 69231 Rauenberg (DE)
(74) Vertreter: Reichert, Werner F., Dr.

(56) Entgegenhaltungen:
- DE-A- 19 621 179
- DE-A- 19 802 462
- DE-U- 29 915 334
- DE-U- 29 921 159
- US-A- 3 195 502
- US-A- 4 911 915
- US-A- 5 777 303

## Beschreibung

Die Erfindung betrifft eine Vorrichtung zur vorzugsweise automatischen Handhabung und/oder Bearbeitung von Objekten, insbesondere im Bereich der Medizintechnik, mit mindestens einer Bearbeitungsstation und einem Objektträger zum Verbringen des Objekts zu der Bearbeitungsstation, ggf. durch die Bearbeitungsstation hindurch und von der Bearbeitungsstation weg.

Vorrichtungen der gattungsbildenden Art sind aus den unterschiedlichsten Bereichen bekannt. Dabei handelt es sich ganz allgemein um Vorrichtungen, die zur Handhabung und/oder Bearbeitung beliebiger Objekte dienen. Die Objekte werden dabei entweder einer einzigen Bearbeitungsstation oder mehreren Bearbeitungsstationen meist in vorgegebener Reihenfolge zugeführt, dort bearbeitet und dann schließlich von der Bearbeitungsstation wegtransportiert, wobei unterschiedliche Gruppen von Bearbeitungsstationen hintereinander angeordnet sein können.

Lediglich beispielhaft wird auf die EP 0 849 582 A1 verwiesen. Aus dieser Druckschrift ist eine Vorrichtung zur Behandlung von Objekten, insbesondere von zytologischen oder histologischen Präparaten, bekannt. Zytologische oder histologische Präparate werden dort mittels eines Objektträgers bzw. Korbes einem Färbeautomaten zugeführt, wobei der Färbeautomat mehrere Bearbeitungsstationen umfasst. Ist das Objekt dem Färbeautomat einmal zugeführt, ist eine Identifikation des Objekts oder gar mehrere Objekte innerhalb des Färbeautomaten nicht mehr möglich. Die gleichzeitige Behandlung unterschiedlicher Präparate ist mit der bekannten Vorrichtung daher nicht möglich, da die Gefahr der Verwechslung unterschiedlicher Präparate gegeben ist. Auch ist es nicht möglich, mit der bekannten Vorrichtung gleichzeitig unterschiedliche Färbeprogramme mit gleichen oder unterschiedlichen Präparaten zu fahren, da zwischen den unterschiedlichen Präparaten, die unterschiedlich zu behandeln bzw. unterschiedlich zu färben sind, nicht unterschieden werden kann.

Aus der DE 196 21 179 ist ein Verfahren zur Identifikation und Untersuchung von Blutröhrchen mit Probe bekannt, bei dem auf dem Blutröhrchen ein Transponder befestigt ist. Der Transponder hat Patientendaten und Daten zur weiteren Untersuchung gespeichert, die im Labor ausgelesen werden. Über diese Daten ist eine Zuordnung der Blutröhrchen zu einem bestimmten Analysearbeitsplatz automatisch möglich. Die Analyseergebnisse können auf dem Transponder des Blutröhrchens gespeichert werden. Nachteilig ist hier, dass nur eine einmalige Zuordnung zu einem bestimmten Arbeitsplatz möglich ist.

Der vorliegenden Erfindung liegt daher die Aufgabe zugrunde, eine Vorrichtung zur automatischen Handhabung von histologischen oder zytologischen Objekten weiterzubilden, dass ein vollautomatischer Betrieb bei eindeutiger Identifikation der zu behandelnden Objekte auch über mehrere, nacheinander ablaufende Behandlungsstationen möglich ist.

Die voranstehende Aufgabe wird durch die Merkmale des Patentanspruches 1 gelöst. Vorteilhafte Weiterbildungen der Erfindung sind Gegenstand der Unteransprüche.

Es ist erkannt worden, dass eine automatische Programmabarbeitung nur dann möglich ist, wenn sich die zu handhabenden und/oder zu bearbeitenden Objekte eindeutig identifizieren lassen. Dazu ist dem Objektträger in eindeutiger Weise ein Code zugeordnet, wobei dieser Code durchaus auch dem Objekt selbst zugeordnet sein könnte. Bei histologischen bzw. zytologischen Präparaten bietet es sich jedoch an, den Code dem Objektträger zuzuordnen, so dass das darauf bzw. darin befindliche Objekt eindeutig über den am Objektträger angebrachten Code identifizierbar ist. Weiter sind dem Code Informationen über das Objekt und/oder über die Handhabung oder Bearbeitung des Objekts zuordenbar. Mit anderen Worten lässt sich dem Objektträger und somit dem Objekt über den Code das gesamte Programm der Bearbeitung zuordnen, so dass - ebenfalls über den Code - der gesamte Programmablauf steuerbar ist. Dazu sind die Informationen über den Code lesbar bzw. abrufbar, so dass in jeder Phase der Bearbeitung die Position und der Zustand des Objekts feststellbar bzw. überprüfbar ist. Die Voraussetzung für eine automatische Programmabarbeitung bei eindeutiger Identifizierung des zu bearbeitenden bzw. zu behandelnden Objekts ist geschaffen.

Gerade im Hinblick auf eine mehrstufige Bearbeitung ist es von Vorteil, wenn mehrere Bearbeitungsstationen räumlich hintereinander angeordnet sind. Im Rahmen einer solchen funktionalen Verkettung unterschiedlicher Bearbeitungsstationen ist es von besonderer Bedeutung, dass die Objekte an jeder Bearbeitungsstation eindeutig detektierbar sind, nämlich über den dem Objektträger und somit dem Objekt zugeordneten Code.

Der Code ist in einem dem Objektträger zugeordneten elektrischen, elektromagnetischen oder optischen Speichermedium abgelegt. Entsprechend den voranstehenden Ausführungen läßt sich der Code aus dem Speichermedium herauslesen, so dass auch insoweit eine eindeutige Identifizierung des Objekts - anhand des Codes - möglich ist. Im Konkreten kann der Objektträger eine Sendeeinheit und ggf. auch eine Empfängereinheit aufweisen, wobei es sich bei der dem Objektträger zugeordneten Sendereinheit und ggf. Empfängereinheit in ganz besonders vorteilhafter Weise um einen Transponder handeln kann. Jedwede bislang bekannten Ausführungsformen handelsüblicher Transponder lassen sich dabei verwenden, wobei wesentlich ist, dass der Transponder an definierbaren Stellen, so beispielsweise an den jeweiligen Bearbeitungsstationen, zum Aussenden eines Signals bzw. zum Aussenden des Codes aktivierbar ist. Die Aktivierung erfolgt üblicherweise über eine Aktivierungs- oder Erregungsspule, mittels der die Aktivierung des Transponders zum Aussenden eines Signals sowie die Signalübertragung erfolgt.

Im Rahmen eines Ausführungsbeispiels der Erfindung ist jeder Bearbeitungsstation eine separate, ortsfeste Erregerspule zugeordnet.

Der Transponder könnte als reiner Lese-Transponder oder als kombinierter Schreib-Lese-Transponder ausgeführt sein. Insoweit wäre es denkbar, dass der Transponder vorgegebene Codeinformationen aussendet oder mit Codeinformationen belegbar ist, die er nach entsprechender Belegung und nach Aktivierung aussenden kann. Wie bereits zuvor erwähnt, lassen sich sämtliche Varianten handelsüblicher Transponder in erfindungsgemäßer Weise verwenden.

In konstruktiver Hinsicht ist es ganz besonders einfach, wenn der Transponder fest mit dem Objektträger verbunden ist, wobei der Transponder vorzugsweise gekapselt ist, so daß eine Kontamination oder Beschädigung des Transponders wirksam vermieden ist.

Insbesondere bei der Handhabung unterschiedlichster Objekte ist es von Vorteil, wenn der Transponder in Form eines an- oder aufsteckbaren Clips oder dergleichen ausgebildet ist, so dass dem Objektträger und somit dem Objekt Transponder mit unterschiedlichen Codeinformationen zuordenbar sind. Hier könnte man sich mit vorgegebenen Codeinformationen belegter Transponder bedienen, um den jeweiligen Objekten unterschiedliche Programmabläufe an den jeweiligen Bearbeitungsstationen zuzuordnen.

Im Lichte der erfindungsgemäßen Lehre ist es von weiterem Vorteil, wenn der Transponder mit mindestens einem Empfänger kommuniziert, wobei der Empfänger als Auswerteelektronik/Steuereinheit zu verstehen ist. Jeder Erregerspule kann ein Empfänger bzw. eine entsprechende Auswerteelektronik/Steuereinheit zugeordnet sein. Ebenso ist es denkbar, dass bei Vorkehrung mehrerer Erregerspulen diese allesamt mit einem einzigen Empfänger kommunizieren. Der Empfänger könnte wiederum eine Schreib-Lese-Einheit umfassen, um nämlich einerseits Informationen aufzunehmen und andererseits Informationen weiterzugeben.

In weiter vorteilhafter Weise ist der Empfänger mit einem Prozessrechner und/oder einer Auswerteelektronik verbunden, so dass mit Hilfe der detektierten Codes nicht nur eine Erkennung des Objekts, sondern auch eine Aktivierung einzelner Bearbeitungsschritte bzw. Bearbeitungsvorgänge über den Prozessrechner möglich ist. Über den gesamten Bearbeitungsablauf hinweg läßt sich die Position des Objekts überprüfen bzw. feststellen und kann sogar in den Bearbeitungsprozess eingegriffen werden, und zwar in Kenntnis der genauen Position des zu bearbeitenden Objekts.

Grundsätzlich ist es jedenfalls möglich, dass mehrere Empfänger mit einem einzigen Prozessrechner und/oder einer einzigen Auswerteelektronik verbunden sind, wobei unterschiedliche Empfänger durchaus auch mit unterschiedlichen Prozessrechnern und/oder verschiedenen Auswerteelektroniken verbunden sein können. Hier ist eine individuelle Anpassung an den Bedarf möglich, wobei es durchaus denkbar ist, dass unterschiedliche Bearbeitungsstationen oder Gruppen von Bearbeitungsstationen auch unterschiedliche Prozessrechner sowie Auswerteelektroniken haben.

Des Weiteren ist es möglich, dass der Empfänger - für sich gesehen - einer Bearbeitungsstation zugeordnet ist, wobei jeder Bearbeitungsstation ein Empfänger oder auch mehrere Empfänger zugeordnet sind.

Wie bereits zuvor erwähnt, dient der Code zur Identifizierung des Objektträgers und somit des Objekts. Darüber hinaus ist es möglich, den Code entsprechend der Positionierung des jeweiligen Empfängers zur Positionsmeldung bzw. Positionsbestimmung des Objektträgers und somit des Objekts zu verwenden. Darüber hinaus läßt sich der Code zur Zuordnung eines Handhabungsprogramms oder Bearbeitungsprogramms verwenden, so dass einem bestimmten Objekt auch eine bestimmte Bearbeitung eindeutig zuordenbar ist, wobei nach der Bearbeitung eine eindeutige Identifizierung des Objekts ebenfalls wieder möglich ist.

Schließlich sei noch einmal angemerkt, dass es sich bei dem Objekt um ein histologisches oder zytologisches Präparat und bei dem Objektträger um einen das Präparat aufnehmenden Korb oder dergleichen handeln kann. Entsprechend könnte es sich bei den Bearbeitungsstationen um Stationen eines Färbeautomaten zum Färben histologischer oder zytologischer Präparate handeln, wobei die gesamte Handhabung und Bearbeitung histologischer und zytologischer Präparate und die entsprechenden Bearbeitungsstationen gemäß voranstehender Beschreibung zu steuern und überwachen sind, nämlich dadurch, dass dem zu bearbeitenden Objekt ein eindeutiger Code einerseits zur Identifizierung des Objekts und andererseits zur Zuordnung eines Bearbeitungsprogramms zuordenbar ist.

Es gibt nun verschiedene Möglichkeiten, die Lehre der vorliegenden Erfindung in vorteilhafter Weise auszugestalten und weiterzubilden.

Dazu ist einerseits auf die dem Patentanspruch 1 nachgeordneten Ansprüche, andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Darstellung die prinzipielle Funktionsweise der Vorrichtung
- Fig. 2: in einer schematischen Darstellung die prinzipielle Funktionsweise eines Transponder, wie er bei der erfindungsgemäßen Vorrichtung als elektronischer Codeträger verwendbar ist,
- Fig. 3: eine teilweise Darstellung einer erfindungsgemäßen Vorrichtung, wobei es sich dort um einen Färbeautomaten für histologische oder zytologische Präparate handelt und wobei dort der einen Transponder tragende Objektträger zu Beginn des Programmablaufs an einer Erregerspule vorbeigeführt und dabei identifiziert wird,
- Fig. 4: in einer schematischen Darstellung, teilweise, ein ebenfalls einen Färbeautomaten betreffendes Ausführungsbeispiel einer erfindungsgemäßen Vorrichtung, und
- Fig. 5: ein weiteres Ausführungsbeispiel der erfindungsgemäßen Vorrichtung betreffend einen Färbeautomaten.

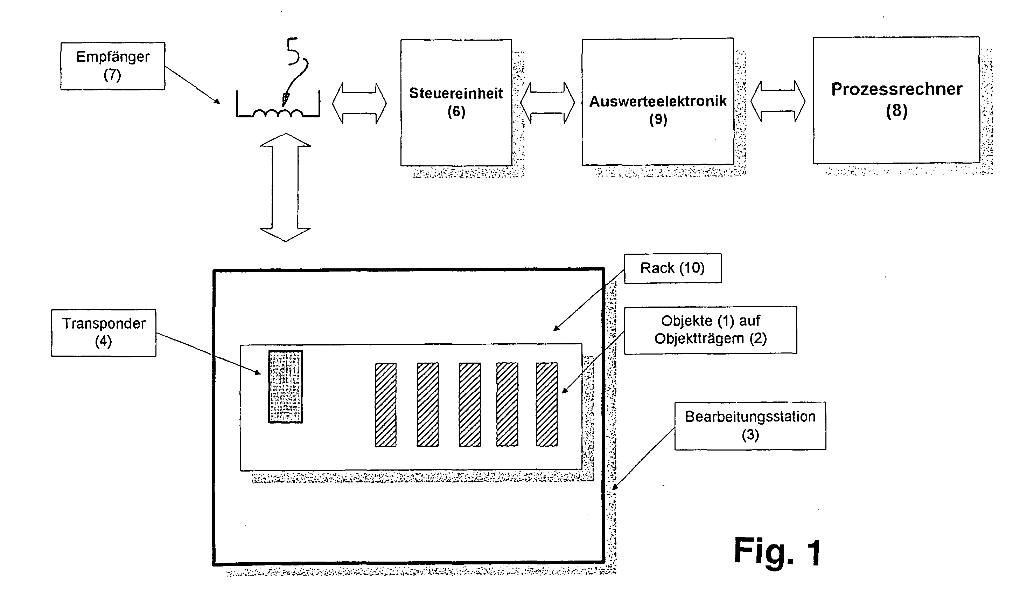

Fig. 1 zeigt in schematischer Darstellung die prinzipielle Funktionsweise der Vorrichtung zur vorzugsweise automatischen Handhabung und/oder Bearbeitung von Objekten 1, wobei es sich dabei im Konkreten um ein histologisches oder zytologisches Präparat handelt, welches sich zur Bearbeitung in einem in Fig. 1 lediglich angedeuteten Objektträger 2 befindet. Mehrere der Objektträger 2 sind in einem Rack 10 angeordnet.

Eine Bearbeitungsstation 3 ist in Fig. 1 ebenfalls lediglich angedeutet, wobei an der Bearbeitungsstation 3 einerseits das Objekt 1 bzw. der Objektträger 2 und/oder das Rack 10 identifiziert und andererseits dessen Anwesenheit festgestellt wird bzw. werden.

In erfindungsgemäßer Weise weist der Objektträger 2 bzw. das Rack 10 einen Code auf, wobei dem Code Informationen über das Objekt 1 und über dessen Bearbeitung zuordenbar sind. Diese Informationen sind über den Code lesbar bzw. abrufbar.

Im Konkreten ist der Code in einem dem Objektträger 2 bzw. dem Rack 10 zugeordneten elektromagnetischen Speichermedium abgelegt, nämlich in einem Transponder 4, der hier als kombinierte Sender/Empfängereinheit zu verstehen ist.

Fig. 1 zeigt des Weiteren andeutungsweise, dass der Bearbeitungsstation 3 eine Erregerspule 5 zur Aktivierung des Transponders 4 zugeordnet ist, wobei die Erregerspule 5 über eine Steuereinheit 6 aktivierbar ist.

Bei der in Fig. 1 gezeigten Darstellung ist der Transponder 4 auf dem Objektträger 2 bzw. an dem Rack 10 angebracht. Ungeachtet der Ausführungsform, wonach der Transponder 4 unmittelbar auf dem Objektträger 2 angebracht ist, ist es auch denkbar, dass nicht etwa einzelne Objekte gekennzeichnet werden, sondern stets Sammlungen von Objekten 1, und zwar in sogenannten Racks 10, die mehrere Objektträger 2 bzw. Objekte 1 beinhalten. Letztendlich befinden sich die histologischen bzw. zytologischen Präparate (Objekte 1) auf den Objektträgern 2, wobei sowohl die Objektträger 2 sowie auch die Objektträgerhalter, nämlich die sogenannten Racks 10, mit dem Transponder 4 gekennzeichnet werden, die sich in den verschiedenen Bearbeitungsstationen 3 befinden.

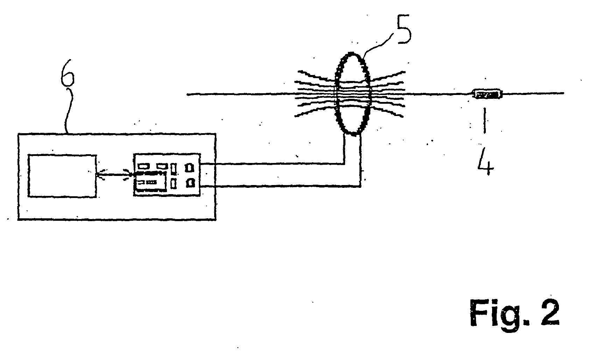

Fig. 2 zeigt die grundsätzliche Funktionsweise eines Transponder-Systems, und zwar zum besseren Verständnis der erfindungsgemäßen Lehre. Der dort gezeigte Transponder 4 ist als kombinierter Schreib-Lese-Transponder und in Form eines an den Objektträger 2 ansteckbaren Clip ausgeführt. Darüber hinaus kommuniziert der Transponder 4 über eine Sende- und Empfangsstrecke mit einem Empfänger 7, genauer gesagt mit einer Auswerteelektronik/Steuereinheit, der bzw. die wiederum mit einem Prozessrechner 8 und einer Auswerteelektronik 9 verbunden ist. Wenngleich bei der hier gewählten Ausführungsform der Prozessrechner 8 der Auswerteelektronik 9 vorgeschaltet ist, kann durchaus auch die Auswerteelektronik 9 dem Prozessrechner 8 vorgeschaltet sein. Über die Detektion des Objekts 1 läßt sich somit der Programmablauf - über den Prozessrechner 8 - beeinflussen, wobei die Auswerteelektronik zur Verarbeitung der detektierten Informationen bzw. Daten des jeweiligen Objekts 1 dient.

Im Hinblick auf die Darstellung in Fig. 2 sei zur Funktionsweise eines Transponder-Systems angemerkt, dass die Erregerspule 5 gleichzeitig auch als Empfangs-Sendeantenne dient. Die Erregerspule 5 erzeugt ein Erregerfeld. Gelangt ein mit einem Transponder versehenes Objekt in dieses Erregerfeld, so wird in einer im Transponder vorgesehenen Spule eine Spannung induziert. Daraufhin sendet der Transponder einen Code (Zahlen- und/oder Ziffernfolge) an die in Fig. 1 dargestellte Auswerteelektronik 9. Dieser Code wird von der gleichen Spule - Erregerspule - empfangen, die das Erregerfeld erzeugt. Insoweit ist die Erregerspule 5 gleichzeitig auch als Empfangs-/Sendeantenne zu bezeichnen. Der Code wird von der nachgeschalteten Auswerteelektronik 9 aufbereitet und in einem Controller oder Prozessor einem Programm zugeordnet, wobei einzelne Programmschritte aktivierbar oder beeinflussbar sind.

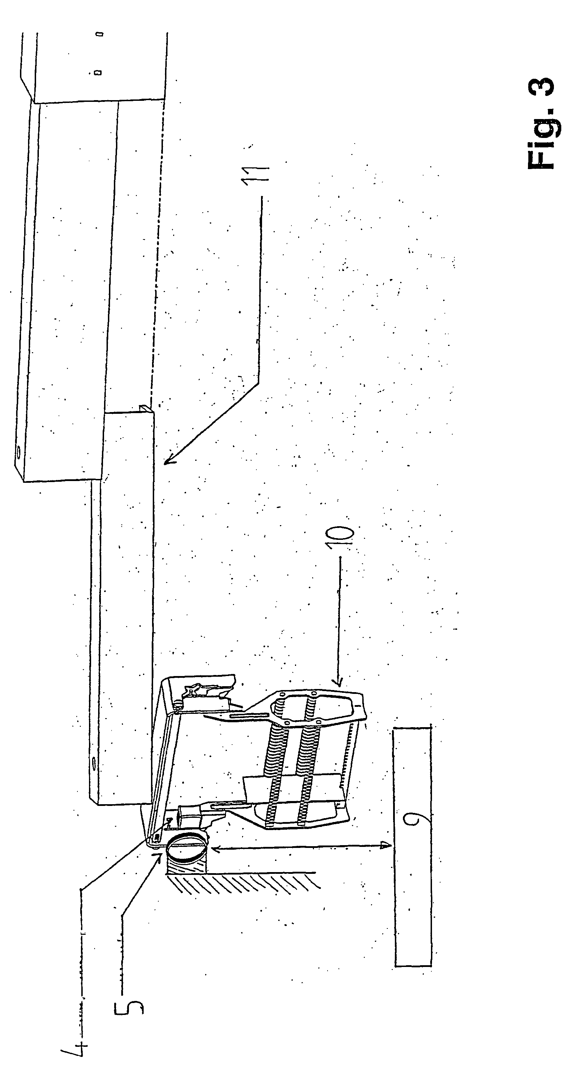

Fig. 3 zeigt ein Ausführungsbeispiel einer erfindungsgemäßen Vorrichtung, wobei es sich hier im Konkreten um einen teilweise gezeigten Färbeautomaten zum Färben histologischer und zytologischer Objekte 1 bzw. Präparate handelt.

Dabei zeigt Fig. 3 ein Rack 10 zur Aufnahme eines Objekts bzw. eines Objektträgers, wobei das Rack 10 zu Beginn des Programmablaufs mittels eines Transportsystems 11 an der Erregerspule 5 vorbeigeführt wird, wobei die Erregerspule 5 gleichzeitig auch als Empfangs/Sendeantenne dient. Über die Erregerspule 5 wird der an dem Rack 10 angeclipste Transponder 4 aktiviert, so dass dieser den das nicht gezeigte Objekt 1 betreffenden Code an die Auswerteelektronik 9 sendet. Eine Identifizierung des Objekts 1 bzw. des Objektträgers 2 oder des Racks 10 ist somit auf einfache Weise möglich.

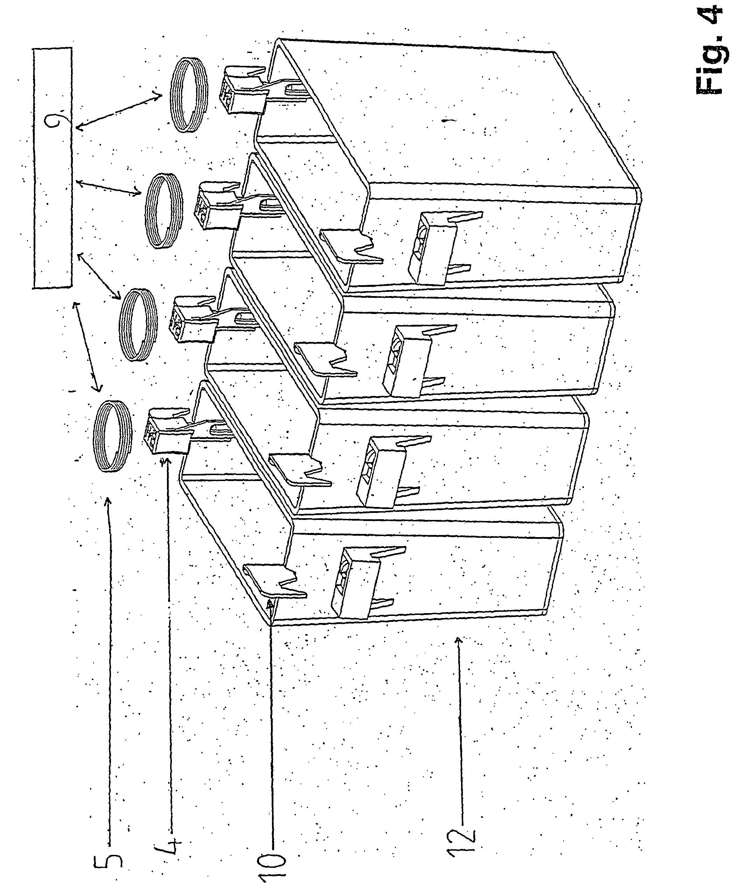

Fig. 4 zeigt die Anordnung von insgesamt vier Behältern 12 eines teilweise dargestellten Färbeautomaten, wobei jedem Behälter 12 bzw. dem Rack 10 ein Transponder 4 in Form eines Transponder-Clip zugeordnet ist. Insgesamt vier Erregerspulen 5 dienen an den Bearbeitungsstationen 3 bzw. an entsprechend vorgegebenen Stellen zur Aktivierung der Transponder 4, worauf die aktivierten Transponder 4 den Code über die Erregerspule 5 an die Auswerteelektronik 9 weitergeben.

Bei dem in Fig. 4 gezeigten Ausführungsbeispiel sind die Erregerspulen 5 über den jeweiligen Beladestationen angeordnet. Über eine elektronische Umschaltung lassen sich die vier Erregerspulen 5 nacheinander an ein RF-Modul anschalten, so dass die Rack 10 in zeitlich sehr kurzen Abständen durch die Transponder 4 identifizierbar und einem konkreten Programmablauf zuordenbar sind. Der Datentransfer erfolgt zwischen den Transpondern 4 und der Auswerteelektronik 9, wobei dies in Fig. 4 durch Pfeile gekennzeichnet ist.

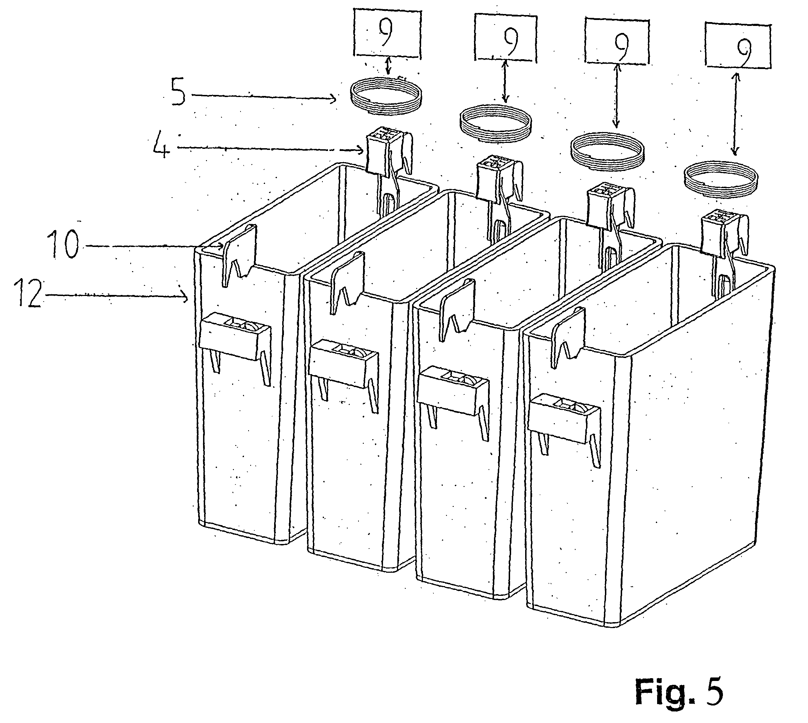

Schliesslich zeigt Fig. 5 ein weiteres Ausführungsbeispiel eines Färbeautomaten, wobei dort für jedes zu identifizierende Rack 10 eine eigene Erregerspule 5 sowie eine komplette Auswerteelektronik 9 vorgesehen ist. Auch hier kommuniziert der Transponder 4 über die Erregerspule 5 mit der Auswerteelektronik 9 wobei die Erregerspule 5 gleichzeitig als Empfangs-/Sendeantenne dient.

Wesentlich ist bei dem in Fig. 5 dargestellten Ausführungsbeispiel, dass jeder Bearbeitungsstation eine Erregerspule 5 und wiederum jeder Erregerspule 5 eine eigene Auswerteelektronik 9 zugeordnet ist.

## Patentansprüche

1. Vorrichtung zum Färben von histologischen und/oder zytologischen Präparaten (1), mit mehreren Bearbeitungsstationen (3), wobei die Präparate (1) auf einem Objektträger (2) aufgebracht sind und einzelne Bearbeitungsstationen (3) durchlaufen, mit einem Transportsystem (11) zum automatischen Transport der Präparate (1) auf dem Objektträger (2) zu den Bearbeitungsstationen (3), wobei die Objektträger (2) in Racks (10) eingesetzt sind, an den Racks (10) jeweils ein Transponder (4) angeordnet ist und die Transponder (4) einen Code zur Zuordnung eines Bearbeitungsprogramms aufweisen, und wobei mindestens einer der Bearbeitungsstationen (3) eine Erregerspule (5) zur Aktivierung und Übertragung des Codes an mindestens eine Steuereinheit (6) zugeordnet ist, und mit mindestens ein Empfänger (7), der mit der Steuereinheit (6), mit mindestens einer Auswerteelektronik (9) und einem Prozessrechner (8) verbunden ist, um den automatischen Transport der Präparate (1) zu steuern und Bearbeitungsprozesse an den Bearbeitungsstationen (3) automatisch zu überwachen und gegebenenfalls zu ändern, **dadurch gekennzeichnet dass** ein Färbeautomat vorgesehen ist, der mehrere räumlich hintereinander angeordnete Bearbeitungsstationen (3) umfasst, und wobei jeder der Bearbeitungsstationen (3) mindestens eine Erregerspule (5) zugeordnet ist, die mit der mindestens einen Steuereinheit (6) verbunden ist.

2. Vorrichtung nach Anspruch 1, **dadurch gekennzeichnet, dass** die Erregerspule (5) ortsfest an der Bearbeitungsstation (3) angeordnet ist.

3. Vorrichtung nach Anspruch 1, **dadurch gekennzeichnet, dass** der Transponder (4) als Lese-Transponder ausgeführt ist oder dass der Transponder (4) als kombinierter Schreib-Lese-Transponder ausgeführt ist.

4. Vorrichtung nach einem der Ansprüche 1 bis 3, **dadurch gekennzeichnet, dass** der Transponder (4) fest mit dem Rack (10) verbunden ist oder dass der Transponder (4) in Form eines an- oder aufsteckbaren Clips ausgebildet ist.

5. Vorrichtung nach einem der Ansprüche 1 bis 4, **dadurch gekennzeichnet, dass** der Code zusätzlich zur Identifizierung des Racks (10) und somit des Präparats (1) dient und/oder dass der Code zur Positionsmeldung bzw. Positionsbestimmung des Racks (10) und somit des Präparats (1) dient.

6. Vorrichtung nach mindestens einem der vorherigen Ansprüche, **dadurch gekennzeichnet, dass** eine elektronische Umschaltung zum sequenziellen Anschalten mehrerer Erregerspulen (5) vorgesehen ist.

## Claims

1. Apparatus for staining histological and/or cytological preparations (1), having a number of processing stations (3), the preparations (1) being mounted on a specimen slide (2) and traversing individual processing stations (3), having a transport system (11) for automatically transporting the preparations (1) on the specimen slide (2) to the processing stations (3), the specimen slide (2) being inserted in racks (10), a transponder (4) being arranged in each case at the racks (10), and the transponders (4) having a code for assigning an operating program, and at least one of the processing stations (3) being assigned a excitation coil (5) for activating and transmitting the code to at least one control unit (6), and having at least one receiver (7) which is connected to the control unit (6), to at least one electronic evaluation unit (9) and a process computer (8), in order to control the automatic transport of the preparations (1) and automatically to monitor and, if appropriate, to change processing procedures at the processing stations (3), **characterized in that** an automatic stainer is provided which comprises a number of processing stations (3) arranged spatially one behind another, and each of the processing stations (3) being assigned at least one excitation coil (5) which is connected to the at least one control unit (6).

2. Apparatus according to Claim 1, **characterized in that** the excitation coil (5) is arranged in a fixed fashion at the processing station (3).

3. Apparatus according to Claim 1, **characterized in that** the transponder (4) is designed as a read transponder, or **in that** the transponder (4) is designed as combined read/write transponder.

4. Apparatus according to one of Claims 1 to 3, **characterized in that** the transponder (4) is permanently connected to the rack (10), or **in that** the transponder (4) is designed in the form of a clip which can be slipped on or slipped over.

5. Apparatus according to one of Claims 1 to 4, **characterized in that** the code additionally serves for identifying the rack (10) and thus the preparation (1), and/or **in that** the code serves to report the position and/or determine the position of the rack (10), and thus of the preparation (1).

6. Apparatus according to at least one of the preceding claims, **characterized in that** an electronic switchover system is provided for sequentially switching on a number of excitation coils (5).

## Revendications

1. Dispositif de coloration de préparations histologiques et/ou cytologiques (1), le dispositif comprenant plusieurs postes de traitement (3), les préparations (1) étant appliquées sur un porte-objet (2) et traversant les postes de traitement (3) individuels, comprenant un système de transport (11) pour le transport automatique des préparations (1) sur le porte-objet (2) vers les postes de traitement (3), les porte-objets (2) étant placés dans des casiers (10), un émetteur-récepteur (4) étant disposé sur chacun des casiers (10) et les émetteurs-récepteurs (4) présentant un code d'attribution à un programme de traitement, au moins une bobine d'excitation (5) qui active et transfère le code à au moins une unité de commande (6) étant associée à au moins l'un des postes de traitement (3), et comprenant au moins un récepteur (7) qui est relié à l'unité de commande (6), à au moins une électronique d'évaluation (9) et à un calculateur de processus (8) pour commander le transport automatique des préparations (1), surveiller automatiquement les opérations de traitement sur les postes de traitement (3) et éventuellement les modifier, **caractérisé en ce qu'**est prévu un automate de coloration qui comprend plusieurs postes de traitement (3) disposés les uns derrière les autres dans l'espace, au moins une bobine d'excitation (5) qui est reliée à au moins une unité de commande (6) étant associée à chacun des postes de traitement (3).

2. Dispositif selon la revendication 1, **caractérisé en ce que** la bobine d'excitation (5) est disposée en position fixe sur le poste de traitement (3).

3. Dispositif selon la revendication 1, **caractérisé en ce que** l'émetteur-récepteur (4) est configuré comme émetteur-récepteur de lecture ou **en ce que** l'émetteur-récepteur (4) est configuré comme émetteur-récepteur combiné de lecture et d'écriture.

4. Dispositif selon l'une des revendications 1 à 3, **caractérisé en ce que** l'émetteur-récepteur (4) est relié fixement au casier (10) ou **en ce que** l'émetteur-récepteur (4) est configuré sous la forme d'une pince épinglable ou enfichable.

5. Dispositif selon l'une des revendications 1 à 4, **caractérisé en ce que** le code sert en outre à l'identification du casier (10) et donc de la préparation (1) et/ou **en ce que** le code sert à annoncer la position ou déterminer la position du casier (10) et donc de la préparation (1).

6. Dispositif selon au moins l'une des revendications précédentes, **caractérisé en ce qu'**une commutation électronique est prévue pour brancher successivement plusieurs bobines d'excitation (5).
